# EUROPÄISCHE PATENTSCHRIFT

(11) **EP 0 671 520 B1**
(45) Veröffentlichungstag und Bekanntmachung des Hinweises auf die Patenterteilung: **03.06.1998**
(21) Anmeldenummer: 93202883.0
(22) Anmeldetag: 09.03.1994
(51) Int. Cl.: E04D 13/00, E04D 13/08, E03B 3/02

(54) **Regenwasser-Bewässerungssystem**
Rainwater irrigation system
Système d'irrigation pour eau de pluie

(43) Veröffentlichungstag der Anmeldung: 13.09.1995
(73) Patentinhaber: Fritzsche, Uwe, Dr., D-38104 Braunschweig (DE)
(72) Erfinder: Fritzsche, Uwe, Dr., D-38104 Braunschweig (DE)

(56) Entgegenhaltungen:
- DE-A- 4 204 628
- DE-C- 4 016 436
- DE-U- 8 904 546
- GB-A- 2 174 473
- US-A- 3 076 669

## Beschreibung

Die Erfindung betrifft ein Regenwasser-Bewässerungssystem mit einem Kunststoffspezialschlauch.

Regenwasser-Bewässerungssysteme, die z. B. aus der deutschen Offenlegungsschrift DE-A-42 04 628 bekannt sind, werden in der Praxis eingesetzt, um Regen- oder Schmelzwasser von Dächern beliebiger Art über Regenfallrohre, die mit Regenfangklappen ausgerüstet sind, abzuleiten.

Aufgabe der Erfindung ist es, ein Bewässerungssystem der erwähnten Gattung zu schaffen, das mit niedrigen Anschaffungskosten hergestellt werden kann und womit Regen- oder Schmelzwasser einfach und schnell, von Regenfallrohren abgeleitet, in Behälter geführt oder zur Freilandbewässerung benutzt werden kann.

Diese Aufgabe wird erfindungsgemäß durch ein Regenwasser-Bewässerungssystem, "Ökoquelle-System" genannt, mit den im unabhängigen Anspruch 1 angegebenen Merkmalen gelöst. Vorteilhafte Ausgestaltungen sind in den abhängigen Ansprüchen angegeben.

Obwohl das erfindungsgemäße System wetterabhängig ist und für ansteigendes Gelände nur zur Behälterfüllung geeignet ist, bringt es folgende Vorteile:
- kostenlose Freilandbewässerung ohne Energieverbrauch,
- niedrige Anschaffungskosten mit schneller Amortisation durch entfallende ständig steigende Wasser- und Abwassergebühren,
- schnelle einfache Montage ohne Werkzeug oder Kleber,
- bedarfsgerechter Einsatz durch handelsübliche Rohre und Schläuche mit entsprechenden Abzweigen,
- äußerst umweltfreundlich und ökologisch sinnvoll, da bei Dauerbetrieb in Herbst und Winter Grundwasserstände besonders bei flächendeckendem Einsatz vieler Ökoquelle-Systeme angehoben werden können und
- absolut wartungsfreies System.

In einer Ausführungsform der Erfindung ist auf dem unteren Konus ein beliebiges handelsübliches Rohr oder ein Schlauch von z. B. 100 mm Durchmesser aufsteckbar ist, z. B. um einen Garten zu bewässern.

Vorzugsweise ist der Kunststoffspezialschlauch so steif, daß er durch sein Eigengewicht plus Wasserfüllung, z. B. über einen Behälterrand gelegt, nicht einknickt.

In einer bevorzugten Ausführungsform der Erfindung besteht der oberen Konus aus verformbarem Weichkunststoffmaterial.

Weitere Vorteile, Einzelheiten und Merkmale der Erfindung ergeben sich nachfolgend aus den anhand von Zeichnungen dargestellten Ausführungsbeispielen. Dabei zeigen im einzelnen:
- Figur 1:: eine schematische Darstellung des unteren Konus, mit der Rotationsachse X-X des Konus und einer senkrecht dazu stehenden Achse Y-Y;
- Figur 2:: eine schematische Darstellung des gesamten Regenwasser-Bewässerungssysteme;
- Figur 3:: eine schematische Seitendarstellung des erfindungsgemäßen Systems in Gebrauchsstellung;
- Figur 4:: eine weitere schematische Seitendarstellung des erfindungsgemäßen Systems in Gebrauchsstellung, wobei der Kunststoffschlauch über einen Behälterrand gelegt ist;
- Figur 5:: eine schematische Darstellung des oberen Konus;
- Figur 6:: eine schematische Darstellung des erfindungsgemäßen Systems beim Befüllen von mehreren nebeneinander stehenden Regenwasserauffangbehälter

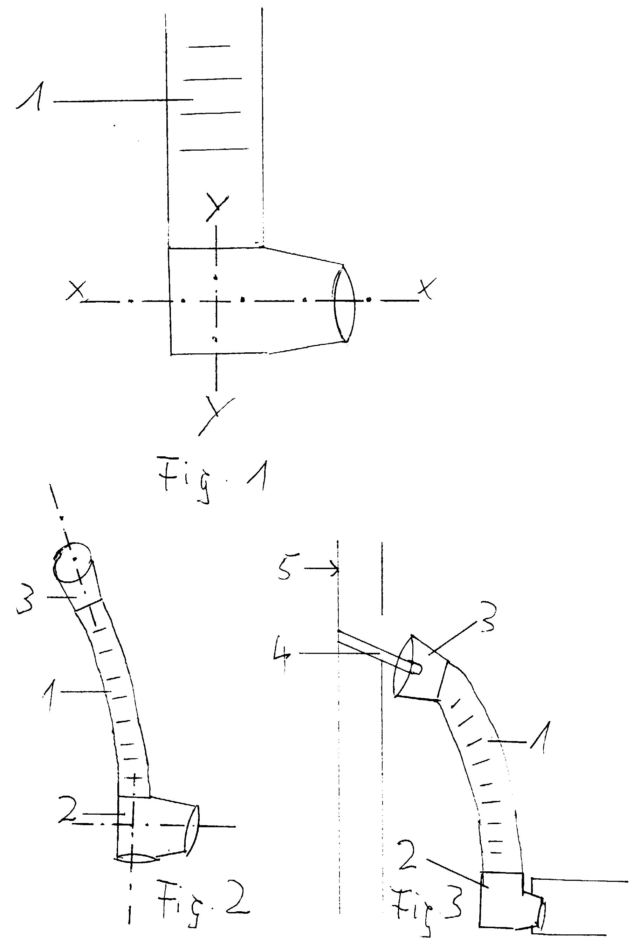

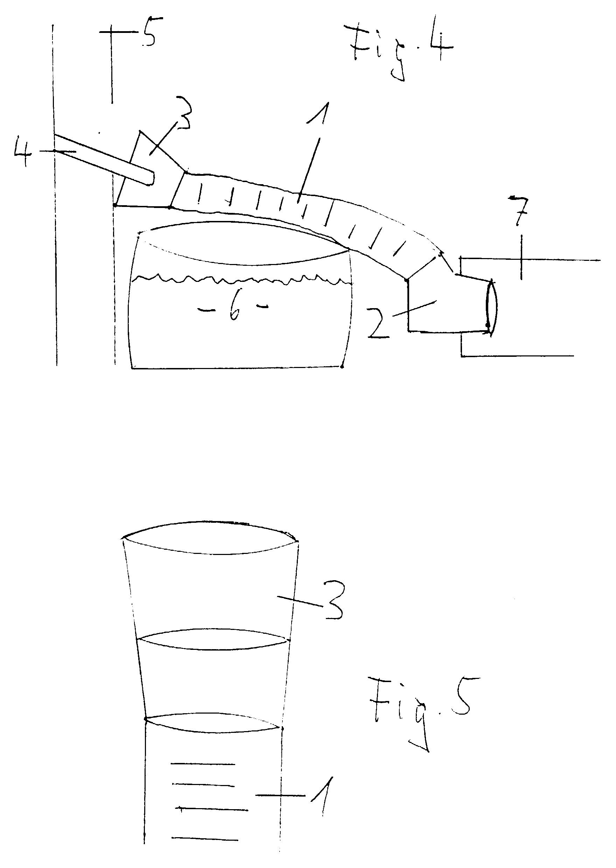

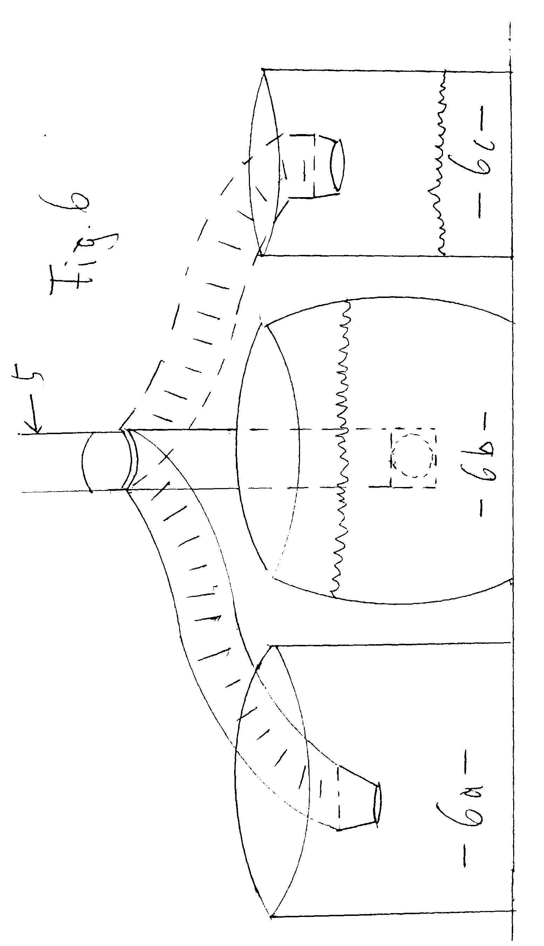

Die Figur 2 zeigt einen rohrförmigen breiten Spezialschlauch 1 aus Kunststoff, der 85 cm lang ist und einen Außendurchmesser von 100 mm hat. Dieser Spezialschlauch 1 ist flexibel, dehnbar und verwindungssteif. Um auf handelsübliche Regenfangklappen 4 des Außendurchmessers 100, 87 und 76 mm aufsteckbar zu sein, weist er einen konischen bzw. konisch zulaufenden oberen Anschlußteil 3 aus verformbaren Weichkunststoffmaterial auf.
Das untere ebenfalls konische, ca. 15 cm lange Anschlußteil 2 hat einen Außendurchmesser ca. 90-110 mm und ist aus Kunststoff.
Das erfindungsgemäße "Ökoquelle-System", die schnell, einfach und ohne "Werkzeug oder Kleber montiert werden kann, ist zur Freilandbewässerung geeignet, indem z. B. handelsübliche 100er Rohre oder 100er Endlos-Schläuche ungelocht mit entsprechenden Muffen und Abzweigen auf den unteren Anschlußteil 2 aufgesteckt werden; außerdem ist eine Behälterfüllung möglich, ohne daß die Behälter 6a, 6b, 6c nach der Füllung verschoben werden müssen; durch die handelsüblichen Rohre und Muffen sowie Abzweige aus Kunststoff ist eine gezielte bedarfsgerechte Freilandbewässerung sogar in Abwesenheit, z. B. Urlaub, von Bedienungspersonal möglich.
Ein bedarfsgerechter Einsatz ist möglich weil handelsübliche Rohre und Schläuche mit entsprechenden Abzweigen eingesetzt werden.
Das erfindungsgemäße "Ökoquelle-System" ist äußerst umweltfreundlich und ökologisch sinnvoll, da bei Dauerbetrieb in Herbst und Winter Grundwasserstände besonders bei flächendeckendem Einsatz vieler Ökoquell-Systeme angehoben werden können und weil das System absolut wartungsfrei ist.

Von Dächern beliebiger Art über handelsübliche Regenfallrohre 5 der Durchmesser 100, 87, 76 mm, z. B. Garagen, die mit den üblichen Regenfangklappen 4 ausgerüstet sind, abgeleitetes Regenwasser oder Schmelzwasser wird über einen einfach über die Regenfangklappe 4 gestülpten ca. 85 cm langen dehn- und verwindbaren flexiblen Spezialschlauch 1 z. B. in mehrere nebeneinander stehende Regenwasserauffangbehälter 6a, 6b, 6c geleitet, ohne daß die nacheinander befüllten Behälter 6a, 6b, 6c vor oder nach dem Befüllen verschoben werden müssen. Der unteren Konus 2 verhindert das Aufschwimmen.
Sind die Behälter 6a, 6b, 6c gefüllt, kann weiter ablaufendes Regenwasser in beliebiger Richtung auf freies Land abgeleitet werden und dort z. B. zur Bewässerung genutzt werden. Hierzu läßt man das Schlauchende mit dem unteren Spezialkonus 2 frei über den Behälterrand 6 hängen und steckt ein handelsübliches 100er Kanalgrundrohr 7, auch KG-Rohr genannt, beliebiger Länge auf den Konus 2, welches mit handelsüblichen KG-Rohr abzweigen weiter bedarfsgerecht ausgebaut werden kann. Statt ein KG-Rohr kann auch z. B. ein 100er Endlos-Drainschlauch ungelocht aufgesteckt werden.

## Patentansprüche

1. Regenwasser-Bewässerungssystem beinhaltend einen Kunststoffspezialschlauch (1), gekennzeichnet durch einen in Gebrauchsstellung oberen Konus (3) zum Aufstecken auf eine Regenfangklappe (4) und einen in Gebrauchsstellung unteren Konus (2), der um 180° um eine senkrecht zu seiner eigenen Rotationsachse (X-X) stehende Achse (Y-Y) schwenkbar ist.

2. Regenwasser-Bewässerungssystem nach Anspruch 1, dadurch gekennzeichnet, daß auf dem unteren Konus (2) ein beliebiges handelsübliches Rohr (7) oder ein Schlauch von z.B. 100 mm Durchmesser aufsteckbar ist, z.B. um einen Garten zu bewässern.

3. Regenwasser-Bewässerungssystem nach einem der Ansprüche 1 oder 2, dadurch gekennzeichnet, daß der Kunststoffspezialschlauch (1) so steif ist, daß er durch sein Eigengewicht plus Wasserfüllung, z.B. über einen Behälterrand (6) gelegt, nicht einknickt.

4. Regenwasser-Bewässerungssystem nach einem der Ansprüche 1 bis 3, dadurch gekennzeichnet, daß der oberen Konus (3) aus verformbarem Weichkunststoffmaterial ist.

## Claims

1. The Rainwater Irrigation-System consists of a special plastic pipe (1), identified through the upper cone (3) in the position of use, with the rainwater diversion flap (4) and the lower cone (2), in its operating position, which stands vertical at 180° to its own rotating axle (X-X), is axle (Y-Y) swivel-mounted.

2. The Rainwater Irrigation-System according to claim 1, thereby identified, that on the lower cone (2) an optienel standard pipe (7) or a hose pipe with a diameter of 100 mm is connected, for example to water a garden.

3. The Rainwater Irrigation-System according to claims 1 or 2 , thereby identified , that the special plastic hose (1) so rigid is, that it can hold its own weight plus the water contents for example when lies over the edge of water tank (6) without bending through.

4. The Rainwater Irrigation-System according to the claims 1 to 3 , thereby identified, that the upper cone (3) is made out of soft formable plastic material.

## Revendications

1. Système d'irrigation par eau de pluie contenant un tuyau spécial en plastique (1), se distinguant par un cône placé en haut en position d'utilisation (3), à emmancher sur un clapet de retenue de la pluie (4) et par un cône placé en bas en position d'utilisation (2) qui pivote de 180° autour d'un axe (Y-Y) orienté verticalement par rapport à son propre axe de rotation (X-X).

2. Système d'irrigation par eau de pluie conforme à la spécification 1, se distinguant par le fait qu'il est possible d'emmancher sur le cône inférieur (2) n'importe quel tube du commerce (7) ou un tuyau p. ex. de 100 mm de diamètre, pour arroser p. ex. un jardin.

3. Système d'irrigation par eau de pluie conforme à l'une des spécifications 1 ou 2, se distinguant par le fait que le tuyau spécial en plastique (1) est si rigide qu'il ne plie pas en raison de son propre poids et de celui de l'eau qu'il contient, p. ex. si on le pose sur le souple d'un réservoir (6).

4. Système d'irrigation par eau de pluie conforme à l'une des spécifications 1 à 3, se distinguant par le fait que le cône supérieur (3) est réalisé dans un matériau plastique tendre et déformable.
